(19) Europäisches Patentamt
European Patent Office
Office européen des brevets

(11) **EP 3 825 921 B1**

(12) **EUROPEAN PATENT SPECIFICATION**

(45) Date of publication and mention
of the grant of the patent:
**21.05.2025 Bulletin 2025/21**

(21) Application number: **19211130.0**

(22) Date of filing: **25.11.2019**

(51) International Patent Classification (IPC):
**G06N 3/084** *(2023.01)*    **G06N 3/045** *(2023.01)*
**G06N 3/047** *(2023.01)*    *G06N 7/00* *(2023.01)*

(52) Cooperative Patent Classification (CPC):
**G06N 3/084; G06N 3/045; G06N 3/047;** G06N 7/01

(54) **METHOD AND DEVICE FOR PROCESSING SENSOR DATA**

VERFAHREN UND VORRICHTUNG ZUR VERARBEITUNG VON SENSORDATEN

PROCÉDÉ ET DISPOSITIF DE TRAITEMENT DE DONNÉES DE CAPTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.05.2021 Bulletin 2021/21**

(73) Proprietor: **Robert Bosch GmbH
70442 Stuttgart (DE)**

(72) Inventors:
• **Kandemir, Melih
70439 Stuttgart (DE)**
• **Look, Andreas
70197 Stuttgart (DE)**

(56) References cited:
• PHILIPP BATZ ET AL: "Approximate Bayes learning of stochastic differential equations", ARXIV.ORG, CORNELL UNIVERSITY LIBRARY, 201 OLIN LIBRARY CORNELL UNIVERSITY ITHACA, NY 14853, 17 February 2017 (2017-02-17), XP081274146, DOI: 10.1103/PHYSREVE.98.022109
• FENG DI ET AL: "Towards Safe Autonomous Driving: Capture Uncertainty in the Deep Neural Network For Lidar 3D Vehicle Detection", 2018 21ST INTERNATIONAL CONFERENCE ON INTELLIGENT TRANSPORTATION SYSTEMS (ITSC), IEEE, 4 November 2018 (2018-11-04), pages 3266 - 3273, XP033470375, ISBN: 978-1-7281-0321-1, [retrieved on 20181207], DOI: 10.1109/ITSC.2018.8569814

• MARINO DANIEL L ET AL: "Modeling and Planning Under Uncertainty Using Deep Neural Networks", IEEE TRANSACTIONS ON INDUSTRIAL INFORMATICS, IEEE SERVICE CENTER, NEW YORK, NY, US, vol. 15, no. 8, 1 August 2019 (2019-08-01), pages 4442 - 4454, XP011739150, ISSN: 1551-3203, [retrieved on 20190806], DOI: 10.1109/TII.2019.2917520
• KEUNTAEK LEE ET AL: "Safe end-to-end imitation learning for model predictive control", ARXIV.ORG, CORNELL UNIVERSITY LIBRARY, 201 OLIN LIBRARY CORNELL UNIVERSITY ITHACA, NY 14853, 27 March 2018 (2018-03-27), XP080859691
• CHUNYUAN LI ET AL: "Preconditioned Stochastic Gradient Langevin Dynamics for Deep Neural Networks", 23 December 2015 (2015-12-23), XP055690246, Retrieved from the Internet <URL:https://arxiv.org/pdf/1512.07666.pdf>
• "Gaussian Processes for Machine Learning", vol. 1, 1 January 2006, MIT PRESS, Berlin, Heidelberg, ISBN: 978-0-26-218253-9, article CARL EDWARD RASMUSSEN ET AL: "Gaussian Processes for Machine Learning", XP055153328

**Description**

The present disclosure relates to methods and devices for processing sensor data.

The result of a regression analysis of sensor data may be applied for various control tasks. For example, in an autonomous driving scenario, a vehicle may perform regression analysis of sensor data indicating a curvature of the road to derive a maximum speed.

However, in many applications, it is not only relevant what the result is (e.g. maximum speed in the above example) but also how certain the result is. For example, in an autonomous driving scenario, a vehicle controller should take into account whether the prediction of a maximum possible maximum speed has sufficient certainty before controlling the vehicle accordingly.

The publication by Ricky T. Q. Chen, Yulia Rubanova, Jesse Bettencourt, David Duvenaud, "Neural Ordinary Differential Equations", NeurIPS, 2018 introduces a neural network that governs the dynamics of an Ordinary Differential Equation (ODE) as a generic building block in learning systems. The input pattern is set as an initial value for this ODE. However, this is a fully deterministic dynamical system, hence it cannot express uncertainties.

The publication by PHILIPP BATZ ET AL: "Approximate Bayes learning of stochastic differential equations", DOI: 10.1103/PHYSREVE.98.022109, introduces nonparametric approach for estimating drift and diffusion functions in systems of stochastic differential equations from observations of the state vector. Gaussian processes are used for these functions and estimates are calculated directly from dense data sets using Gaussian process regression.

The publication by FENG DI ET AL: "Towards Safe Autonomous Driving: Capture Uncertainty in the Deep Neural Network For Lidar 3D Vehicle Detection", DOI: 10.1109/ITSC.2018.8569814, ISBN: 978-1-7281-0321-1, introduces practical methods to capture uncertainties in a 3D vehicle detector for Lidar point clouds.

The publication by MARINO DANIEL L ET AL: "Modeling and Planning Under EPO Form 1703 01 .91 TRI Uncertainty Using Deep Neural Networks", ISSN: 1551-3203, DOI: 10.1109/TII.2019.2917520, introduces a stochastic modeling and planning approach using deep Bayesian neural networks (DBNNs).

The publication by KEUNTAEK LEE ET AL: "Safe end-to-end imitation learning for model predictive control", ARXIV.ORG, CORNELL UNIVERSITY LIBRARY, 201 OLIN LIBRARY CORNELL UNIVERSITY ITHACA, NY 14853, 27 March 2018 (2018-03-27), introduces the use of Bayesian networks, which provide both a mean value and an uncertainty estimate as output, to enhance the safety of learned control policies under circumstances in which a test-time input differs significantly from the training set.

The publication by Chunyuan Li ET AL: "Preconditioned Stochastic Gradient Langevin Dynamics for Deep Neural Networks", 23 December 2015 (2015-12-23), retrieved from the Internet: URL:https://arxiv.org/pdf/1512.07666. pdf, proposes combining adaptive preconditioners with Stochastic Gradient Langevin Dynamics (SGLD).

In view of the above, flexible machine learning approaches which provide uncertainty information for an output are desirable.

The present invention is defined in the appended independent claims to which reference should be made. Advantageous features are set out in the appended dependent claims.

The method and the device with the features of the independent claims 1 and 9 allow achieving improved robustness compared to a deterministic approach by modelling the flow dynamics as a stochastic differential equation (SDE) and quantifying prediction uncertainty. Specifically, robustness is improved by assigning Bayesian neural networks (BNNs) on the drift and diffusion terms of the SDE. By using the BNNs in this manner a second source of stochasticity (in addition to the Wiener process for the diffusion) coming from the BNN weights is introduced which improves robustness and the quality of prediction uncertainty assignments.

Additionally, compared to approaches based on dropout, the method and device according to the independent claims do not require manual dropout rate tuning and provides a richer solution family than fixed-rate dropout.

In the drawings, like reference characters generally refer to the same parts throughout the different views. The drawings are not necessarily to scale, emphasis instead generally being placed upon illustrating the principles of the invention, as defined by the appended claims. In the following description, various aspects are described with reference to the following drawings, in which:

Figure 1 shows an example for regression in an autonomous driving scenario.

Figure 2 shows an illustration of a machine learning model according to an embodiment.

Figure 3 shows a flow diagram illustrating a method for processing sensor data according to an embodiment.

In the following, various examples will be described in more detail.

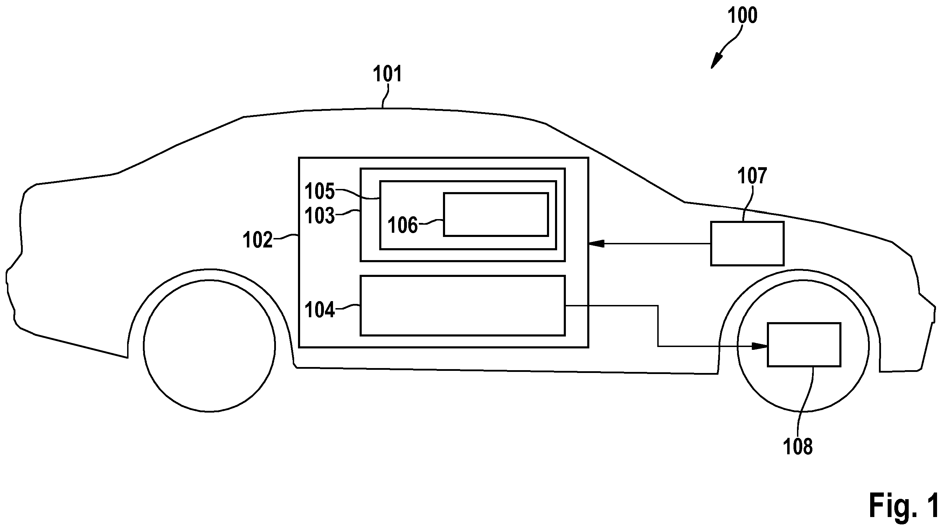

Figure 1 shows an example for regression in an autonomous driving scenario.

In the example of figure 1, a vehicle 101, for example a car, van or motorcycle is provided with a vehicle controller 102.

The vehicle controller 102 includes data processing components, e.g. a processor (e.g. a CPU (central processing unit)) 103 and a memory 104 for storing control software according to which the vehicle controller 102 operates and data on which the processor 103 operates.

In this example, the stored control software comprises instructions that, when executed by the processor 103, make the processor implement a regression algorithm 105.

The data stored in memory 104 can include input sensor data from one or more sensors 107. For example, the one or more sensors 107 may include a sensor measuring the speed of the vehicle 101 and a sensor data representing the curvature of the road (which may for example be derived from image sensor data processed by object detection for determining the direction of the road), condition of the road, etc. Thus, the sensor data may for example be multi-dimensional (curvature, road condition, ...). The regression result may for example be one-dimensional.

The vehicle controller 102 processes the sensor data and determines a regression result, e.g. a maximum speed, and may control the vehicle using the regression result. For example, it may actuate a break 108 if the regression result indicates a maximum speed that is higher than a measured current speed of the vehicle 101.

The regression algorithm 105 may include a machine learning model 106. The machine learning model 106 may be trained using training data to make predictions (such as a maximum speed). Due to the safety issues related to the control task, a machine learning model 106 may be selected which not only outputs a regression result but also an indication of its certainty of the regression result. The controller 102 may take this certainty into account when controlling the vehicle 101, for example brake even if it is below the predicted maximum speed in case the certainty of the prediction is low (e.g. below a predetermined threshold).

A widely used machine learning model is a deep neural network. A deep neural network is trained to implement a function that non-linearly transforms input data (in other words an input pattern) to output data (an output pattern). If the neural network is as residual neural network, its processing pipeline can be viewed as an ODE (ordinary differential equation) system discretized across even time intervals. Rephrasing this model in terms of a continuous-time ODE is referred to as a Neural ODE.

According to various embodiments, a generic Bayesian neural model is provided (which may for example be used as machine learning model 106) that includes solving a SDE (statistical differential equation) as an intermediate step to model the flow of activation maps. The drift function and the diffusion function of the SDE are implemented as Bayesian neural nets (BNN).

According to a Neural-ODE approach the processing of a neural network is formulated as:

$$X_{t+1} = X_t + f(X_t, 0),$$

where $0$ reflects the parameters of the neural network and $h_{t+1}$ is the output of layer $t+1$. This can be interpreted as the explicit Euler-scheme for solving ODEs with step size 1.

With this interpretation, the above equation can be reformulated as:

$$dX(t) = f(X(t), t, 0)\mathrm{dt}$$

Thus, ODE calculus may be used for propagating through the neural network. For making this equation stochastic, stochastic ordinary differential equations are considered. In general form they are given as:

$$dX_t = \mu(X_t, t)dt + a(X_t, t)dB_t$$

The equation is governed by the drift $\mu(x(t))$, which models the deterministic part, and the diffusion $\sigma(x(t))$, which models the stochastic part. For $a(X_t, t) = 0$ a standard ODE is obtained. Solving the above equation requires integrating over the Brownian motion $dB_t$, which reflects the stochastic part of the differential equation. One common and easy approximation method of this differential equation is the Euler-Maruyama scheme: $X_{t+1} = X_t + \mu(X_t)\Delta t + a(X_t)\Delta W$

$\Delta W$ is Gaussian random variable with the property: $\Delta W = W_2 - W_1 \sim N(0, t_2 - t_1)$

This approximation also holds when the variable $x_i$ is a vector $x \in \mathbb{R}^D$. In that case the diffusion term is a matrix-valued function of the input and time $\sigma(x_i, t_i) \in \mathbb{R}^{D \times P}$ and corresponding $\Delta W$ is modelled as P independent Wiener processes $\Delta W \sim \mathcal{N}(0, \Delta t I_P)$ with $I_P$ as the P-dimensional identity matrix.

As stated above, according to various embodiments, $\mu(x_i, t_i)$ and $a(x_i, t_i)$ are each provided by a respective Bayesian Neural Network (BNN), wherein the weights of the BNN calculating $\mu(x_i, t_i)$ are denoted by $\theta_1$ and the weights of the BNN calculating $a(x_i, t_i)$ are denoted by $\theta_2$. The weights may be at least partially shared between the BNNs, i.e. $\theta_1 \cap \theta_2 \neq \emptyset$.

The resulting probabilistic machine learning model can be described by

$$\theta_1, \theta_2 \sim p(\theta_1)p(\theta_2),$$

$$h(t) \sim p(h(t)|\theta_1, \theta_2),$$

$$y|h(T), x \sim p(y|h(T)). \qquad \text{s.t.} \quad h(0) \sim \delta_x.$$

The first line is a prior on the SDE parameters (weights of the BNNs in this case), the second line is the solution of an SDE, and the last line is a likelihood suitable to the output space of the machine learning model. $T$ is the duration of the flow corresponding to the model capacity.

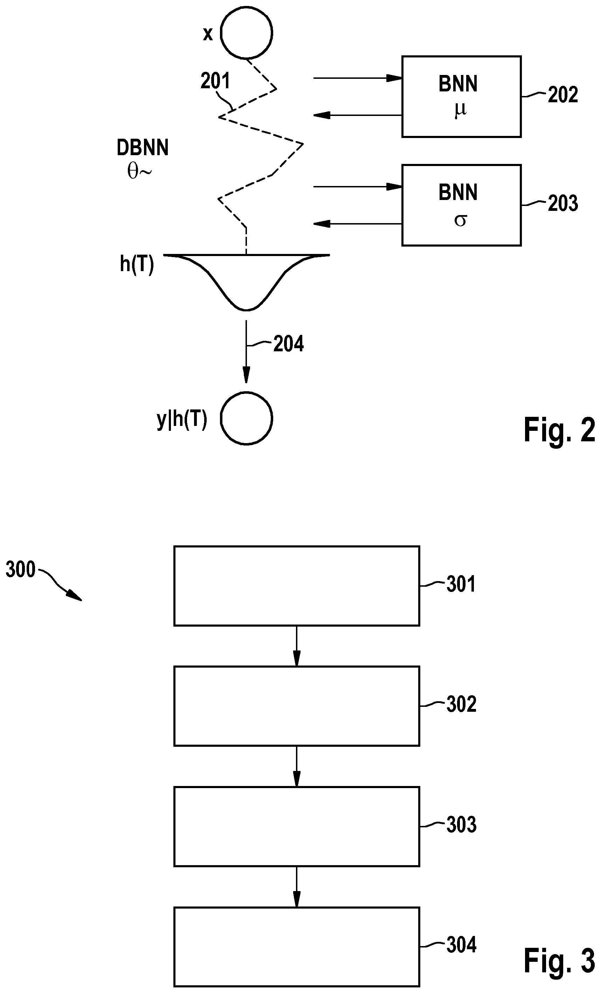

Figure 2 shows an illustration of the machine learning model.

The input is a vector $x$.

For the (input observation) vector $x$ as initial condition, a realization of a stochastic process 201 representing the continuous time activation maps $h(t)$ is determined as solution of an SDE. The $h(t)$ for all $t$ from 1 to T (with e.g. $h(0) = x$) can be seen as latent representations of the input pattern $x$ at every time instant $t$. The part of machine learning model doing this determination is referred to as Differential Bayesian Neural Net (DBNN). It includes BNNs 202, 203 providing the mean term and the diffusion term, respectively, of the SDE (each taking $h(t)$ and $t$ as input). The DBNN outputs an output value $h(T)$ (which may be a vector of same dimension as the input vector $x$).

Depending on the application an additional (e.g. linear) layer 204 calculates the output $y$ of the model, e.g. a regression result for the input sensor data vector $x$. This additional layer 204 may particular reduce the dimension of $h(T)$ (which can be seen as end state) to a desired output dimension, e.g. generate a real number $y$ from the vector $h(T)$.

The probability distribution of the stochastic process is given by

$$p(h(t)|\theta_1, \theta_2) = \int m_{\theta_1}(h(t), t)dt + \int L_{\theta_2}(h(t), t)dB(t)$$

where $B(t)$ is the Brownian motion corresponding to the Wiener process $W(t)$. It should be noted that the second integral on the right hand side of the equation is an Ito integral, unlike the first one. The related SDE is

$$dx(t) = m_{\theta_1}(x(t), t)dt + L_{\theta_2}(x(t), t)dW(t)$$ .

where $m(.,.)$ is the drift term governing the flow of the dynamics and $L(.,.)$ is the diffusion term that jitters the motion at every instant. The probability $p(h(t)|0_1, 0_2)$ does not have a closed-form expression that generalizes across all neural net architectures.

However, it is possible to take approximate samples from it by a discretization rule such as Euler-Maruyama.

According to one embodiment, as a work-around, the stochastic process is marginalized out of the likelihood by Monte Carlo integration according to

$$p(y|\theta_1, \theta_2, x) = \int p(y|h(T), \theta_1, \theta_2, x)p(h(T)|x)dh(T) \approx \frac{1}{M}\sum_{m=1}^{M} p(y|\tilde{h}_m^T, \theta_1, \theta_2, x)$$

where $\tilde{h}_m^T$ is the realization at time T of the $m$th Euler-Maruyama draw. Having integrated out the stochastic process, the model may be trained by approximate posterior inference problem on $p(0_1, 0_2|x, y)$. The sample-driven solution to the stochastic process $h$ integrates naturally into a Markov Chain Monte Carlo (MCMC) scheme. According to one embodiment, Stochastic Gradient Langevin Dynamics (SGLD) with a block decay structure is used to benefit from the gradient-descent algorithm as a subroutine (which is essential to train neural networks effectively.

In the following a training algorithm for the model, i.e. an algorithm for supervised learning to determine $\theta_1$ and $\theta_2$ from training data (comprising a plurality of minibatches), is described.

---

**Algorithm 1 DBNN Inference**

**Inputs:** Initial weights $\theta^0 := (\theta_1^0, \theta_2^0)$, Decay rate $\lambda$, Flow time $T$, Minibatch size $K$, Iteration count $I$
**Outputs:** BNN weights $\{\theta^i\}_{i=1:I}$
**for** $i \leftarrow 1 : I$ **do**
    Sample minibatch $\{x_k, y_k\}_{k=1:K}$
    **for** $k \leftarrow 1 : K$ **do**
        $h_{km}^0 = x_k$
        **for** $m \leftarrow 0 : M$ **do**
            **for** $t \leftarrow 0 : T$ **do**
                $\tilde{h}_{km}^{t+1} \leftarrow \tilde{h}_{km}^t + m_{\theta_1}(\tilde{h}_{km}^t, t)\Delta t + L_{\theta_2}(\tilde{h}_{km}^t, t)\Delta W$
            **end for**
        **end for**
        $\tilde{p}(y_k|\theta_1, \theta_2, x_k) \leftarrow \frac{1}{M}\sum_{m=1}^M p(y_k|\tilde{h}_{km}^T, \theta_1, \theta_2, x_k)$
    **end for**
    $\theta^i \leftarrow \theta^{i-1} + \frac{\epsilon}{2}\left[\nabla \log p(\theta^i) + \frac{N}{K}\sum_{k=1}^K \nabla \log \tilde{p}(y_k|\theta_1^{i-1}, \theta_2^{i-1}, x_k)\right] + \mathcal{N}(0, \epsilon)$
    **if** $n \mod \lambda = 0$ **then**
        $\epsilon \leftarrow \epsilon/2$
    **end if**
**end for**

---

It should be noted that the gradient $\nabla \log \tilde{p}(y_k|\theta_1^{i-1}, \theta_2^{i-1}, x_k)$ may be determined using back propagation. It should further be noted that a probability distribution of $\theta_1$ and a probability distribution of $\theta_2$ may be determined by storing the values of the latest iterations (e.g. for the last 100 i) to arrive at trained BNNs 202, 203.

For regression, an additional linear layer 204 is placed above $h(T)$ in order to match the output dimensionality. Since the properties of the distribution $p(h(T)|x)$ can be estimated in terms of a mean $m(\theta_1)$ and (a Cholesky decompose of) a covariance $L(\theta_2)\,L(\theta_2)^{\mathsf{T}} = \Sigma(\theta_2)$. Both moments can be determined and then propagated through the linear layer 204. The predictive mean is thus modelled as $\sum a_i m_{\theta_1, i} + b_i$ and the predictive variance as $\sum a_i a_j \Sigma_{\theta_2, i, j}$. It is possible to design $L_{\theta_2}$ as a diagonal matrix assuming uncorrelated activation map dimensions.

Further, $L_{\theta_2}$ can be parameterized by assigning the DBNN output on its Cholesky decomposition or can take any other structure of the form $\mathbb{R}^{D \times P}$. When choosing P < D, it is possible to heavily reduce the number of learnable parameters for high dimensional inputs.

In summary, according to various embodiments, a method is provided as illustrated in figure 3.

Figure 3 shows a flow diagram 300 illustrating a method for processing sensor data according to an embodiment.

In 301, input sensor data is received.

In 302, starting from the input sensor data as initial state, a plurality of end states, is determined.

This includes determining, for each end state, a sequence of states, wherein determining the sequence of states comprises, for each state of the sequence beginning with the initial state until the end state,

> a first Bayesian neural network determining a sample of a drift term in response to inputting the respective state;
> a second Bayesian neural network determining a sample of a diffusion term in response to inputting the respective state; and
> determining a subsequent state by sampling a stochastic differential equation comprising the sample of the drift term as drift term and the sample of the diffusion term as diffusion term.

In 303, an end state probability distribution is determined from the determined plurality of end states.

In 304, a processing result of the input sensor data is determined from the end state probability distribution.

According to various embodiments, in other words, BNNs are used to provide the drift term and diffusion term at each step of solving a stochastic differential equation. The uncertainty information provided by the BNNs (by sampling the BNN weights) in addition to the uncertainty information provided by solving the stochastic differential equation (by sampling the Brownian motion) provides information for the processing result, which is for example a regression result, e.g. for controlling a device depending on the sensor data.

Sensor data may comprise image data from an imaging sensor like e.g. a camera or other types of sensors which may produce image-like data such as a LIDAR (light detection and ranging) sensor, an ultrasonic sensor or a radar sensor. The sensor data may also comprise other types of sensor data like sensor data of a kinematic sensor (e.g. an acceleration sensor).

Each state may be seen as a latent representation of the input pattern, i.e. the input sensor data which gives the initial state, at a respective time instant $t$. Illustratively, the state at time instant $t$ can be seen as the initial state (of time instant zero) after being processed by a process represented by the stochastic differential equation for a time period of length $t$. From a neural network perspective, each state may be seen as an activation map.

The approach of figure 3 can be used as a generic building block in all learning systems that map an input pattern to an output pattern. It can serve as an intermediate processing step that provides a rich mapping family, the parameters of which can then be tuned to a particular data set. Wherever a feed-forward neural network can be used, the approach of figure 3 can be used. Further, it is especially useful in safety-critical applications where the predictions of a computer system need to be justified or their uncertainty need to be considered before taking downstream actions depending on this prediction.

In particular, the approach of figure 3 may be applied in all supervised learning setups where a likelihood distribution can be expressed for outputs (e.g. normal distribution for continuous outputs, multinomial distribution for discrete outputs). Further, it may be applied in any generative method where the latent representation has the same dimensionality as the observation. It may further be applied in hypernets that use the resultant BNN weight distribution as an approximate distribution in an inference problem, such as variational inference. Examples for applications are image segmentation and reinforcement learning.

The method of figure 3 may be performed by one or more computers including one or more data processing units. The term "data processing unit" can be understood as any type of entity that allows the processing of data or signals. For example, the data or signals may be treated according to at least one (i.e., one or more than one) specific function performed by the data processing unit. A data processing unit may include an analogue circuit, a digital circuit, a composite signal circuit, a logic circuit, a microprocessor, a micro controller, a central processing unit (CPU), a graphics processing unit (GPU), a digital signal processor (DSP), a programmable gate array (FPGA) integrated circuit or any combination thereof or be formed from it. Any other way of implementing the respective functions, which will be described in more detail below, may also be understood as data processing unit or logic circuitry. It will be understood that one or more of the method steps described in detail herein may be executed (e.g., implemented) by a data processing unit through one or more specific functions performed by the data processing unit.

The first Bayesian neural network and the second Bayesian neural network may be trained by comparing, for each of a plurality of training data units, the processing result for input sensor training data of the training data unit with a reference values of the training data unit.

Generally, the approach of figure 3 may be used to generate control data (e.g. one or more control values) from input sensor data, e.g. data for controlling a robot. The term "robot" can be understood to refer to any physical system or technical system (with a mechanical part whose movement is controlled), such as a computer-controlled machine, a vehicle, a household appliance, a power tool, a manufacturing machine, a personal assistant or an access control system.

The neural network can be used to regress or classify data. The term classification is understood to include semantic segmentation, e.g. of an image (which can be regarded as pixel-by-pixel classification). The term classification is also understood to include a detection, e.g. of an object (which can be regarded as classification whether the object exists or not). Regression in particular includes time-series modelling.

**Claims**

1. A computer-implemented method (300) for processing

sensor data, the method comprising: receiving (301) input sensor data;
determining (302), starting from the input sensor data as initial state, a plurality of end states, comprising determining, for each end state, a sequence of states, wherein determining the sequence of states comprises, for each state of the sequence beginning with the initial state until the end state,

a first Bayesian neural network (202) determining a sample of a drift term in response to inputting the respective state;
a second Bayesian neural network (203) determining a sample of a diffusion term in response to inputting the respective state; and determining a subsequent state by sampling a stochastic differential equation comprising the sample of the drift term as drift term and the sample of the diffusion term as diffusion term;

determining (303) an end state probability distribution from the determined plurality of end states; and determining (304) a processing result of the input sensor data from the end state probability distribution and controlling a movement of a mechanical part of a technical system according to the processing result.

2. The method according to claim 1, further comprising:
training the first Bayesian neural network (202) and the second Bayesian neural network (203) using stochastic gradient Langevin dynamics.

3. The method according to claim 1 or 2, wherein the technical system is a robot, and wherein the processing result includes
a control value for controlling the robot in function of the input sensor data and uncertainty information about the control value.

4. The method of claim 3, further comprising controlling the robot in accordance with the control value if the uncertainty given by the uncertainty information is below a predetermined uncertainty threshold.

5. The method according to claim 3 or 4, wherein determining the end state probability distribution comprises estimating a mean vector and a covariance matrix of the end states and wherein determining the processing result from the end state probability distribution comprises determining a predictive mean from the estimated mean vector of the end states and determining a predictive variance from the estimated covariance matrix of the end states.

6. The method according to claim 5, wherein determining the processing result comprises processing the estimated mean vector and the estimated covariance matrix by a linear layer which performs an affine mapping of the estimated mean vector to a one-dimensional predictive mean and a linear mapping of the estimated covariance matrix to a one-dimensional predictive variance.

7. The method according to any one of claims 1 to 6, comprising controlling an actuator using the processing result.

8. The method of any one of claims 1 to 7, wherein each state is associated with a respective time starting from an initial time of the initial state and represents the input sensor data processed for the associated time by a process given by the stochastic differential equation.

9. An apparatus (103) configured to carry out the method according to any one of claims 1 to 8.

10. A computer program comprising computer instructions which, when executed by a computer, make the computer perform a method according to any one of claims 1 to 8.

11. A computer-readable medium (104) comprising computer instructions which, when executed by a computer, make the computer perform a method according to any one of claims 1 to 8.

**Patentansprüche**

1. Computerimplementiertes Verfahren (300) zur Verarbeitung von Sensordaten, wobei das Verfahren umfasst: Empfangen (301) von Eingangssensordaten;

Bestimmen (302), ausgehend von den Eingangssensordaten als Anfangszustand, einer Mehrzahl von Endzuständen, umfassend ein Bestimmen, für jeden Endzustand, einer Sequenz von Zuständen, wobei das Bestimmen der Sequenz von Zuständen, für jeden Zustand der Sequenz, beginnend mit dem Anfangszustand bis zum Endzustand, umfasst:
Bestimmen, durch ein erstes Bayes'sches neuronales Netzwerk (202), einer Stichprobe eines Driftterms als Reaktion auf das Eingeben des jeweiligen Zustands;
Bestimmen, durch ein zweites Bayes'sches neuronales Netzwerk (203), einer Stichprobe eines Diffusionsterms als Reaktion auf das Eingeben des jeweiligen Zustands und Bestimmen eines nachfolgenden Zustands durch Stichprobennahme einer stochastischen Differentialgleichung, die die Stichprobe des Driftterms als Driftterm und die Stichprobe des Diffusionsterms als Diffusionsterm umfasst;

Bestimmen (303) einer Endzustandswahrscheinlichkeitsverteilung aus der bestimmten Mehrzahl von Endzuständen und

Bestimmen (304) eines Verarbeitungsergebnisses der Eingangssensordaten aus der Endzustandswahrscheinlichkeitsverteilung und Steuern einer Bewegung eines mechanischen Teils eines technischen Systems gemäß dem Verarbeitungsergebnis.

2. Verfahren nach Anspruch 1, das ferner umfasst:
Trainieren des ersten Bayes'schen neuronalen Netzwerks (202) und des zweiten Bayes'schen neuronalen Netzwerks (203) unter Verwendung der stochastischen Gradienten-Langevin-Dynamik.

3. Verfahren nach Anspruch 1 oder 2, wobei das technische System ein Roboter ist und wobei das Verarbeitungsergebnis einen Steuerwert zum Steuern des Roboters in Abhängigkeit von den Eingangssensordaten und Unsicherheitsinformationen über den Steuerwert einschließt.

4. Verfahren nach Anspruch 3, das ferner ein Steuern des Roboters gemäß dem Steuerwert umfasst, wenn die durch die Unsicherheitsinformationen gegebene Unsicherheit unter einer vorbestimmten Unsicherheitsschwelle liegt.

5. Verfahren nach Anspruch 3 oder 4, wobei das Bestimmen der Endzustandswahrscheinlichkeitsverteilung ein Schätzen eines mittleren Vektors und einer Kovarianzmatrix der Endzustände umfasst und wobei das Bestimmen des Verarbeitungsergebnisses aus der Endzustandswahrscheinlichkeitsverteilung ein Bestimmen eines prädiktiven Mittelwerts aus dem geschätzten mittleren Vektor der Endzustände und ein Bestimmen einer prädiktiven Varianz aus der geschätzten Kovarianzmatrix der Endzustände umfasst.

6. Verfahren nach Anspruch 5, wobei das Bestimmen des Verarbeitungsergebnisses ein Verarbeiten des geschätzten mittleren Vektors und der geschätzten Kovarianzmatrix durch eine lineare Schicht umfasst, die eine affine Abbildung des geschätzten mittleren Vektors auf einen eindimensionalen prädiktiven Mittelwert und eine lineare Abbildung der geschätzten Kovarianzmatrix auf eine eindimensionale prädiktive Varianz durchführt.

7. Verfahren nach einem der Ansprüche 1 bis 6, das ein Steuern eines Aktuators unter Verwendung des Verarbeitungsergebnisses umfasst.

8. Verfahren nach einem der Ansprüche 1 bis 7, wobei jeder Zustand einer jeweiligen Zeit ausgehend von einer Anfangszeit des Anfangszustands zugeordnet ist und die Eingangssensordaten darstellt, die für die zugeordnete Zeit durch einen Prozess verarbeitet werden, der durch die stochastische Differentialgleichung gegeben ist.

9. Einrichtung (103), die konfiguriert ist, um das Verfahren nach einem der Ansprüche 1 bis 8 auszuführen.

10. Computerprogramm, das Computeranweisungen umfasst, die bei Ausführung durch einen Computer den Computer zum Durchführen eines Verfahrens nach einem der Ansprüche 1 bis 8 veranlassen.

11. Computerlesbares Medium (104), das Computeranweisungen umfasst, die bei Ausführung durch einen Computer den Computer zum Durchführen eines Verfahrens nach einem der Ansprüche 1 bis 8 veranlassen.

**Revendications**

1. Procédé mis en œuvre par ordinateur (300) pour traiter

des données de capteur, le procédé comprenant les étapes suivantes : recevoir (301) des données de capteur d'entrée ;
déterminer (302), en partant des données de capteur d'entrée comme état initial, une pluralité d'états finaux, comprenant de déterminer, pour chaque état final, une séquence d'états, où la détermination de la séquence d'états comprend, pour chaque état de la séquence commençant par l'état initial jusqu'à l'état final,
un premier réseau neuronal bayésien (202) déterminant un échantillon d'un terme de dérive en réponse à l'entrée de l'état respectif ;
un deuxième réseau neuronal bayésien (203) déterminant un échantillon d'un terme de diffusion en réponse à l'entrée de l'état respectif ; et déterminer un état suivant en échantillonnant une équation différentielle stochastique comprenant l'échantillon du terme de dérive comme terme de dérive et l'échantillon du terme de diffusion comme terme de diffusion ;

déterminer (303) une distribution de probabilité d'état final à partir de la pluralité déterminée d'états finaux ; et

déterminer (304) un résultat de traitement des données de capteur d'entrée à partir de la distribution de probabilité d'état final et contrôler un mouvement d'une partie mécanique d'un système technique en fonction du résultat de traitement.

2. Procédé selon la revendication 1, comprenant en outre l'étape suivante :

entraîner le premier réseau neuronal bayésien (202) et le deuxième réseau neuronal bayésien (203) à l'aide d'une dynamique de Langevin à gradient stochastique.

3. Procédé selon la revendication 1 ou la revendication 2, dans lequel le système technique est un robot, et dans lequel le résultat du traitement comprend une valeur de commande pour commander le robot en fonction des données de capteur d'entrée et des informations d'incertitude concernant la valeur de commande.

4. Procédé selon la revendication 3, comprenant en outre de commander le robot en fonction de la valeur de commande si l'incertitude donnée par les informations d'incertitude est inférieure à un seuil d'incertitude prédéterminé.

5. Procédé selon la revendication 3 ou la revendication 4, dans lequel la détermination de la distribution de probabilité d'état final comprend l'estimation d'un vecteur moyen et d'une matrice de covariance des états finaux, et dans lequel la détermination du résultat du traitement à partir de la distribution de probabilité d'état final comprend la détermination d'une moyenne prédictive à partir du vecteur moyen estimé des états finaux et la détermination d'une variance prédictive à partir de la matrice de covariance estimée des états finaux.

6. Procédé selon la revendication 5, dans lequel la détermination du résultat du traitement comprend le traitement du vecteur moyen estimé et de la matrice de covariance estimée par une couche linéaire qui effectue une application affine du vecteur moyen estimé vers une moyenne prédictive unidimensionnelle et une application linéaire de la matrice de covariance estimée vers une variance prédictive unidimensionnelle.

7. Procédé selon l'une quelconque des revendications 1 à 6, comprenant la commande d'un actionneur à l'aide du résultat du traitement.

8. Procédé selon l'une quelconque des revendications 1 à 7, dans lequel chaque état est associé à un temps respectif commençant à un temps initial de l'état initial et représente les données de capteur d'entrée traitées pour le temps associé par un processus donné par l'équation différentielle stochastique.

9. Appareil (103) configuré pour mettre en œuvre le procédé selon l'une quelconque des revendications 1 à 8.

10. Programme d'ordinateur comprenant des instructions informatiques qui, lorsqu'elles sont exécutées par un ordinateur, amènent l'ordinateur à exécuter un procédé selon l'une quelconque des revendications 1 à 8.

11. Support lisible par ordinateur (104) comprenant des instructions informatiques qui, lorsqu'elles sont exécutées par un ordinateur, amènent l'ordinateur à exécuter un procédé selon l'une quelconque des revendications 1 à 8.

Fig. 1

101
100
107
105
103
102
106
104
108

EP 3 825 921 B1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **RICKY T. Q. CHEN** ; **YULIA RUBANOVA** ; **JESSE BETTENCOURT** ; **DAVID DUVENAUD**. Neural Ordinary Differential Equations. *NeurIPS*, 2018
- **PHILIPP BATZ et al.** *Approximate Bayes learning of stochastic differential equations*
- **FENG DI et al.** *Towards Safe Autonomous Driving: Capture Uncertainty in the Deep Neural Network For Lidar 3D Vehicle Detection*, ISBN 978-1-7281-0321-1
- **MARINO DANIEL L et al.** *Modeling and Planning Under EPO Form 1703 01 .91 TRI Uncertainty Using Deep Neural Networks*, ISSN 1551-3203
- Safe end-to-end imitation learning for model predictive control. **KEUNTAEK LEE et al.** ARXIV.ORG. CORNELL UNIVERSITY LIBRARY, 201 OLIN LIBRARY CORNELL UNIVERSITY ITHACA, 27 March 2018
- **CHUNYUAN LI et al.** *Preconditioned Stochastic Gradient Langevin Dynamics for Deep Neural Networks*, 23 December 2015, https://arxiv.org/pdf/1512.07666.pdf